# EUROPÄISCHE PATENTSCHRIFT

(11) **EP 2 205 463 B1**
(45) Veröffentlichungstag und Bekanntmachung des Hinweises auf die Patenterteilung: **20.09.2017**
(21) Anmeldenummer: 08845251.1
(22) Anmeldetag: 27.10.2008
(51) Int. Cl.: B60R 11/00, G03B 11/04, B60R 1/00, G03B 15/00

(54) **VORRICHTUNG MIT EINER KAMERAEINHEIT**
DEVICE HAVING A CAMERA UNIT
DISPOSITIF DOTÉ D'UNE UNITÉ CAMÉRA

(30) Priorität: 31.10.2007 DE 102007052401
(43) Veröffentlichungstag der Anmeldung: 14.07.2010
(73) Patentinhaber: Huf Hülsbeck & Fürst GmbH & Co. KG, 42551 Velbert (DE)
(72) Erfinder: DAMMERS, Bernd, 46149 Oberhausen (DE)
(74) Vertreter: Vogel, Andreas
(86) Internationale Anmeldenummer: PCT/EP2008/064498
(87) Internationale Veröffentlichungsnummer: WO 2009/056507

(56) Entgegenhaltungen:
- EP-A- 1 332 923
- WO-A-2004/012962
- DE-A1-102004 039 450
- FR-A- 2 875 661
- JP-A- 56 099 835

## Beschreibung

Die Erfindung betrifft eine Vorrichtung mit einer Kameraeinheit, die zur Bilderfassung des Außenbereiches eines Kraftfahrzeuges dient, und einer Deckeleinheit, die über einen Antrieb von einer Schließstellung in eine Offenstellung und umgekehrt bewegbar ist, wobei die Deckeleinheit mit einer Frontplatte ausgeführt ist, die in der Schließstellung der Deckeleinheit das Objektiv der Kameraeinheit verdeckt und die Kameraeinheit zu einer Aufnahmerichtung ausgerichtet ist, bei der in der Offenstellung der Deckeleinheit die Bilderfassung durchführbar ist.

Kameraeinheiten, die zur Bilderfassung eines Außenbereiches des Kraftfahrzeuges dienen, sind allgemein bekannt. Beispielsweise können derartige Kameraeinheiten im Bereich des assistierten Einparkens von Kraftfahrzeugen zum Einsatz kommen. Die Kameraeinheiten erzeugen für den Kraftfahrzeugfahrer auf einem Bildschirm innerhalb der Fahrzeugkabine ein Bild des Außenbereiches, insbesondere der Rückansicht des Kraftfahrzeuges, welches eine wesentliche Unterstützung für den Fahrer darstellt. Es ist bekannt, derartige Vorrichtungen mif einer Kameraeinheit an diversen Fahrzeugstellen anzubringen, wie zum Beispiel an einem Stoßdämpfer, an einem Kotflügel, an einer Heckleiste usw..

In der DE 60 2004 003 255 T2 ist eine Kameraeinheit offenbart, die als Einparkhilfe für den Fahrer dient. Die Kameraeinheit weist eine Deckeleinheit auf, welche von einer Schließstellung in eine Offenstellung und umgekehrt bewegbar ist. Die Deckeleinheit ist an ihrem distalen Ende mit einer Dichtung versehen, die bei einer Verschiebung der Deckeleinheit im permanenten Kontakt mit der Kameraeinheit steht. Durch diesen Wischvorgang kann die Kameraeinheit von Schmutzpartikeln gereinigt werden. Es besteht jedoch die Gefahr, dass aufgrund des Wischvorganges Beschädigungen, insbesondere Verkratzungen an der Kameraeinheit, entstehen.

Weitere Vorrichtungen mit einer Kameraeinheit sind in der DE 10 2004 039 450 A1, JP 56 099835 A, WO 2004/012962 A2, US 2003/0146831 A1 und EP 1 332 923 A2 offenbart.

Es ist Aufgabe der vorliegenden Erfindung, eine Vorrichtung der genannten Art zu schaffen, die die oben genannten Nachteile vermeidet, insbesondere eine Vorrichtung mit einer Kameraeinheit bereitgestellt wird, die einen wirksamen Schutz der Kameraeinheit sowohl in der Schließstellung der Deckeleinheit als auch während der Bewegung der Deckeleinheit in seine Offenstellung ermöglicht.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass der Antrieb mit einem derartigen Mechanismus zusammenwirkt, dass zu Beginn des Öffnungsvorganges die Frontplatte der Deckeleinheit, die um eine Drehachse verschwenkbar gelagert ist, sich von der Kameraeinheit abhebend entfernt. Der besondere Vorteil dieser Erfindung ist, dass bei der Bewegung von der Schließstellung in die Offenstellung die Deckeleinheit zu Beginn des Öffnungsvorgangs sich von der Kameraeinheit löst, ohne dass eine schädliche

Kontaktierung unmittelbar an der Kameraeinheit, insbesondere an ihrem Objektiv, auftritt. Vorteilhafterweise entspricht die Richtung der Bewegung der Frontplatte zu Beginn des Öffnungsvorgangs in etwa der Aufnahmerichtung der Kameraeinheit. Das bedeutet, dass die Frontplatte sich in Richtung des Außenbereiches des Kraftfahrzeugs bewegt, der als Bild durch die Kameraeinheit erfasst werden soll. In einer bevorzugten Ausführungsform entfernt sich die Frontplatte über ihre gesamte Fläche von der Kameraeinheit, indem die Frontplatte zum Außenbereich des Kraftfahrzeuges abhebt. Analog erfolgt der Schließvorgang der Deckeleinheit von der Offenstellung in die Schließstellung, bei der sich die Frontplatte auf. die Kameraeinheit zubewegt bis die Frontplatte auf der Kameraeinheit aufliegt. Der komplette Bewegungsweg der Deckeleinheit wird somit durch eine Dreh- und/oder Schwenkbewegung um die Achse realisiert.

In einer Ausführungsform der Erfindung ist der Mechanismus innerhalb eines Gehäuses angeordnet, wobei die Frontplatte in jeder Stellung der Deckeleinheit außerhalb des Gehäuses sich befindet. Ebenfalls kann vorgesehen sein, dass die Deckeleinheit in der Schließstellung und/oder in der Offenstellung zumindest teilweise innerhalb des Gehäuses sich befindet.

Besonders vorteilhaft ist, dass die Frontplatte an der der Kameraeinheit zugewandten Innenseite eine Dichtung aufweist, die in der Schließstellung der Deckeleinheit auf der Kameraeinheit abdichtend aufliegt. Hierdurch wird wirkungsvoll erreicht, dass während der Schließstellung keine Schmutzpartikel, Feuchtigkeit etc. zur Kameraeinheit gelangen können. In dieser genannten Stellung der Frontplatte ist die Kameraeinheit, insbesondere ihr Objektiv wirkungsvoll geschützt. Der Mechanismus kann derart ausgeführt sein, dass in der Schließstellung eine gewisse Kraft auf die Frontplatte wirkt, wodurch die Frontplatte gegen die Kameraeinheit gedrückt wird. Während des Öffnungsvorgangs hingegen löst sich die Frontplatte mit der Dichtung von der Kameraeinheit, ohne entlang der Kameraeinheit, insbesondere am Objektiv, zu gleiten und eventuelle Verschleißspuren an der Objektivlinse der Kameraeinheit entstehen zu lassen.

Vorzugsweise ist der Mechanismus innerhalb eines Gehäuses angeordnet, wobei die Frontplatte in jeder Stellung der Deckeleinheit außerhalb des Gehäuses sich befindet. Damit die Frontplatte während des Öffnungsvorgangs schonend sich von der Kameraeinheit abhebt, ist in einer bevorzugten Ausführungsform der Erfindung die Deckeleinheit mit einem Arm ausgeführt, der ausgehend von der Frontplatte bis zur Drehachse in Richtung Gehäuse verläuft. Der Arm ist entsprechend zur Frontplatte abgewinkelt, wodurch insbesondere ein kompakter Aufbau der erfindungsgemäßen Vorrichtung erzielt werden kann.

Besonders vorteilhaft ist, dass die Achse, um die die Deckeleinheit verschwenkt werden kann, seitlich zur Kameraeinheit verläuft. Hierdurch wird ebenfalls eine kompakte Bauweise der erfindungsgemäßen Vorrichtung begünstigt.

Der Mechanismus kann innerhalb des Gehäuses einen Hebel aufweisen, der zwischen dem Antrieb und der Deckeleinheit an der Achse drehbar gelagert ist. Der Mechanismus ist hierbei in Wirkverbindung mit dem Hebel. Der Hebel wiederum übt eine gewisse Kraft auf die Deckeleinheit aus, sodass die Deckeleinheit mit der Frontplatte in ihre entsprechende Stellung bewegt werden kann.

In einer die Erfindung verbessernden Maßnahme kann der Hebel mit einem Kontaktierungskörper ausgebildet sein, an dem der Antrieb angreift. Der Kontaktierungskörper bildet hierbei eine Art Anschlagsfläche, an der der Antrieb angreift. Der Antrieb kann beispielsweise als Hubantrieb ausgeführt sein, der an seinem freien Ende ein Antriebselement aufweist, das auf den Kontaktierungskörper des um die Achse drehbaren Hebels wirkt. Während der Bewegung der Deckeleinheit von der Schließstellung in die Offenstellung und umgekehrt, erfolgt eine translatorische Bewegung des Hubantriebs, wobei gleichzeitig der Hebel mit der Deckeleinheit um die Achse verschwenkt wird. Um wirkungsvoll die translatorische Bewegung des Antriebs in eine Schwenkbewegung zu erzielen, erfolgt während der Bewegung der Deckeleinheit eine Relativbewegung des Kontaktierungskörpers des Hebels am Antriebselement. In einer möglichen Ausgestaltungsform ist der Kontaktierungskörper zylinderartig ausgebildet. Im Gegenzug ist das Antriebselement mit einer konkaven Seite ausgeführt, die während der Bewegung der Deckeleinheit von der Schließstellung in die Offenstellung und umgekehrt auf dem Kontaktierungskörper stets anliegt. Während der Bewegung der Deckeleinheit rollt der Kontaktierungskörper entlang der konkaven Seite des Antriebselementes ab, wobei der Kontaktierungskörper um die Drehachse, um die auch die Frontplatte verschwenkt wird, sich bewegt.

Vorteilhafterweise ist ein Rückstellmittel, insbesondere ein Federelement vorgesehen, das auf den Hebel wirkt, wodurch eine Rückbewegung des Hebels während der Bewegung der Deckeleinheit von der Offenstellung in die Schließstellung sichergestellt ist. Während der Antrieb in seiner Ausgangsstellung sich zurückbewegt, übt das Rückstellmittel eine Kraft auf den Hebel aus, sodass der Kontaktierungskörper gegen das Antriebselement gedrückt wird.

In einer weiteren Alternative der Erfindung können der Hebel und der Antrieb über ein Gelenk in Wirkverbindung stehen. Das bedeutet, dass anstelle des Kontaktierungskörpers und des Antriebselementes das Gelenk zum Einsatz kommt, um eine translatorische Bewegung des Antriebes auf den Hebel zu übertragen, der anschließend um die Drehachse geschwenkt wird.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine Ausführungsform der Vorrichtung mit einer Kameraeinheit und einer Deckeleinheit, die sich in einer Schließstellung befindet,
- Figur 2: die Vorrichtung gemäß Figur 1, wobei die Deckeleinheit sich in der Offenstellung befindet,
- Figur 3: eine Explosionsdarstellung der wesentlichen Bauteile der Vorrichtung gemäß Figur 1 und Figur 2,
- Figur 4: eine Schnittansicht der Vorrichtung gemäß Figur 1 und
- Figur 5: eine Draufsicht auf die Vorrichtung gemäß Figur 4.

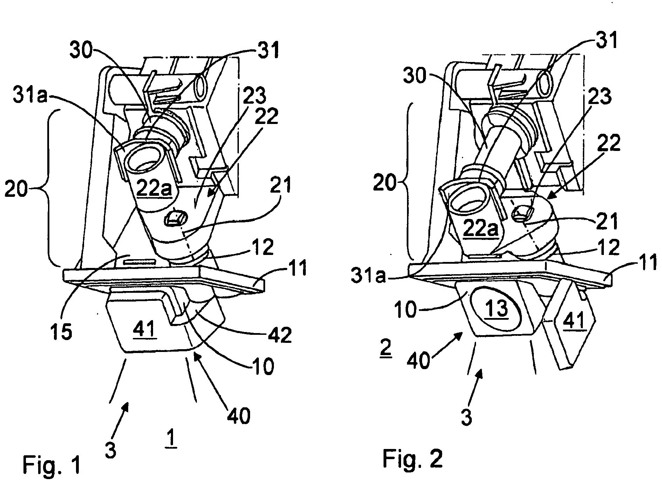

In Figur 1 und Figur 2 ist eine Kameraeinheit 10 mit einer Deckeleinheit 40 dargestellt. Die Kameraeinheit 10 dient zur Bilderfassung des Außenbereiches eines Kraftfahrzeugs, wobei die Deckeleinheit 40 von einer Schließstellung 1, die in Figur 1 dargestellt ist, in eine Offenstellung 2 gemäß Figur 2 bewegbar ist. Die Deckeleinheit 40 ist mit einer Frontplatte 41 ausgeführt, die in der Schließstellung 1 der Deckeleinheit 40 das Objektiv 13 der Kameraeinheit 10 verdeckt. Die Kameraeinheit 10 ist an der Fahrzeugkarosserie (nicht dargestellt) befestigt, wobei die Kameraeinheit 10 in eine Aufnahmerichtung 3 ausgerichtet ist. In der Offenstellung 2 der Deckeleinheit 40 ist eine Bilderfassung der Kameraeinheit 10 durchführbar. Während der Bewegung von der Schließstellung 1 in die Offenstellung 2 führt die Deckeleinheit 40 eine Schwenkbewegung um eine Achse 21 aus. Die Deckeleinheit 40 wird über einen Antrieb 30, der als Hubantrieb ausgeführt ist, realisiert. Hierbei ist der Antrieb 30 mit einem derartigen Mechanismus 20 in Wirkverbindung, dass zu Beginn des Öffnungsvorgangs die Frontplatte 41 sich von der Kameraeinheit 10 abhebend entfernt und im Wesentlichen in Aufnahmerichtung 3 sich gleichzeitig bewegt. Die Frontplatte 41 führt somit eine Bewegung in Aufnahmerichtung 3 weg von der Kameraeinheit 10 durch, wobei gleichzeitig die Deckeleinheit 40 um die Achse 21 verschwenkt wird. Durch diese Kinematik wird verhindert, dass während, insbesondere zu Beginn des Öffnungsvorganges und während, insbesondere zum Schluss des Schließvorganges Kratzer, Beschädigungen etc. an der Kameraeinheit 10 entstehen.

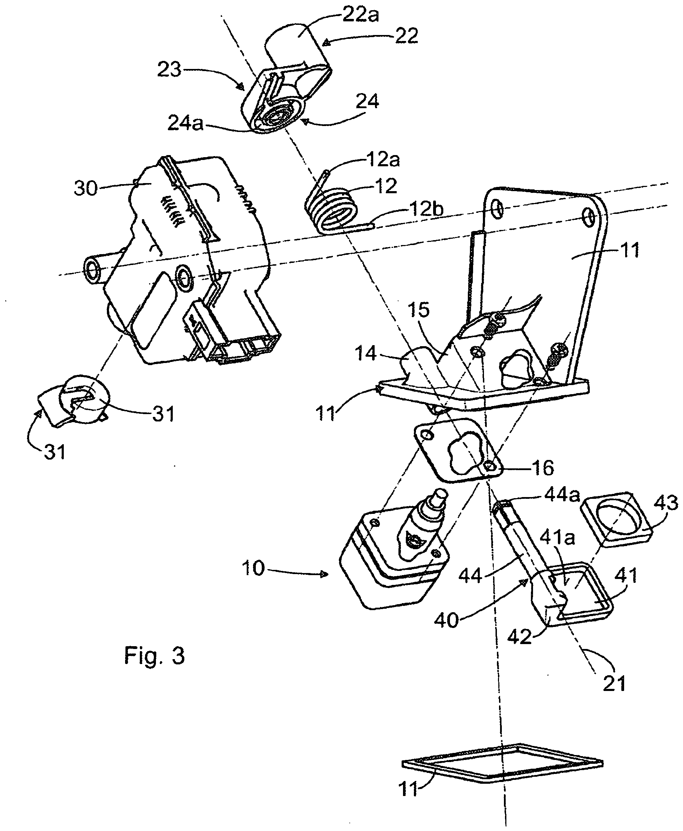

Die Kameraeinheit 10 ist an einem Gehäuse 11 befestigt, das in Figur 1 und Figur 2 als eine Art Rahmen dargestellt ist. Das Gehäuse 11 bildet eine Art Schnittstelle mit dem Kraftfahrzeug und verleiht der erfindungsgemäßen Vorrichtung einen modularen Charakter. Das Gehäuse 11 weist gemäß Figur 3 einen in den Innenbereich ragenden Aufnahmebereich 15 auf, in dem die Kameraeinheit 10 rückseitig eingesetzt ist. Der Aufnahmebereich 15 ist entsprechend der geometrischen Form der Kameraeinheit 10 ausgeführt. Zwischen dem rückseitigen Bereich der Kameraeinheit 10 und dem Aufnahmebereich 15 ist eine Dichtung 16 vorgesehen.

Der Mechanismus 20 besteht aus einer Vielzahl von Bauteilen, die innerhalb des Gehäuses 11 angeordnet sind. Der Mechanismus 20 weist die erste Achse 21 auf, um die die Deckeleinheit 40 drehbar beweglich ist. Hierbei befindet sich die Frontplatte 41 in jeder Stellung der Deckeleinheit 40 außerhalb des Gehäuses 11. Die Frontplatte 41 weist an der der Kameraeinheit 10 zugewandten Innenseite 41a eine Dichtung 43 auf, die in Figur 3 verdeutlicht ist. Die Dichtung 43 liegt in der Schließstellung 1 der Deckeleinheit 40 auf der Kameraeinheit 10 auf und dichtet das Objektiv 13 ab. Die Deckeleinheit 40 ist mit einem Arm 42 ausgeführt, der ausgehend von der Frontplatte 41 bis zur Achse 21 verläuft. Der Mechanismus 20 weist ferner einen Hebel 22 auf, der zwischen dem Antrieb 30 und der Deckeleinheit 40 an der Achse 21, die seitlich zur Kameraeinheit 10 verläuft, drehbar gelagert ist. Der Hebel 22 ist mit einem Kontaktierungskörper 22a ausgebildet, an dem der Antrieb 30 angreift. Der Antrieb 30 weist hierbei an seinem freien Ende ein Antriebselement 31 auf, das auf dem Kontaktierungskörper 22a sowohl in der Schließstellung 1 als auch in der Offenstellung 2 der Deckeleinheit 40 anliegt. Das Antriebselement 31 weist eine konkave Seite 31a auf, die in Wirkverbindung während der Bewegung der Deckeleinheit 40 von der Schließstellung 1 in die Offenstellung 2 mit der zylinderartigen Mantelfläche des Kontaktierungskörpers 22a steht. Die konkave Seite 31a ist C-förmig ausgeführt und wirkt als eine Art Arm, der nach dem Kontaktierungskörper 22a "greift". Die Mantelfläche des Kontaktierungskörpers 22a weist eine Krümmung auf, die größer ist als die Krümmung der konkaven Seite 31a des Antriebselementes 31.

Ferner ist das Gehäuse 11 mit einer Hülse 14 ausgeführt, die in Figur 3 gezeigt ist. In der Hülse 14 ragt ein Stabelement 44 der Deckeleinheit 40 hinein, wobei das freie Ende 44a des Stabelementes 44 am Hebel 22 befestigt ist. Die Deckeleinheit 40 ist mit einem Arm 42 ausgeführt, der ausgehend von der Frontplatte 41 bis zur Achse 21 verläuft. Bei der dargestellten Ausführungsform der Erfindung bilden der Arm 42, die Frontplatte 41 und das Stabelement 44 der Deckeleinheit 40 ein gemeinsames Bauteil aus dem gleichen Material.

Während der Antrieb 30 translatorisch das Antriebselement 31 aus seiner Stellung gemäß Figur 1 in die Stellung gemäß Figur 2 ausfährt, wird die translatorische Bewegung des Antriebs 30 in eine Schwenkbewegung des Hebels 22 um die Achse 21 umgewandelt. Da der Hebel 22 mit der Deckeleinheit 40 fest verbunden ist, hier über eine Schraubverbindung, bewegt sich die Deckeleinheit 40 mit der Frontplatte 41 von der Schließstellung 1 in die Offenstellung 2. Alternative Befestigungsmöglichkeiten des Hebels 22 mit der Deckeleinheit 40, beispielsweise stoffschlüssige oder formschlüssige und/oder kraftschlüssige Verbindungen, sind ebenfalls denkbar. In der Offenstellung 2 der Deckeleinheit 40 kann eine Bilderfassung des Außenbereiches des Kraftfahrzeugs durch die Kameraeinheit 40 erfolgen.

Im vorliegenden Ausführungsbeispiel ist die Kameraeinheit 10 fest, unbeweglich am Gehäuse 11 des Kraftfahrzeugs angeordnet. Selbstverständlich ist es denkbar, in einer weiteren nicht dargestellten Ausführungsform, dass zunächst die Kameraeinheit 10 in einer Ruheposition sich befindet. Während des Bewegungsvorgangs der Deckeleinheit 40 kann ein Mechanismus vorgesehen sein, der gleichzeitig oder ein wenig zeitversetzt die Kameraeinheit 10 zunächst aus ihrer Ruheposition in eine aktive Position herausschwenkt. Die Bewegung der Kameraeinheit 10 in die jeweilige Position kann rotatorisch und/oder translatorisch erfolgen. In dieser aktiven Position befindet sich diese schwenkbare, nicht dargestellte Kameraeinheit in Aufnahmerichtung. Anschließend kann eine entsprechende Bewegung der Frontplatte 41 erfolgen, bis die Offenstellung der Deckeleinheit 40 erreicht ist. Ebenfalls ist es denkbar, dass zunächst die Kameraeinheit 10 angesteuert wird, um in die jeweilige Position ausgerichtet zu werden. Anschließend kann der genannte Bewegungsvorgang der Deckeleinheit 40 startet. Das bedeutet, dass die Bewegungen der Kameraeinheit 10 und der Deckeleinheit 40 auch sequenziell erfolgen können.

Während des Öffnungsvorgangs von der Schließstellung 1 in die Offenstellung 2 erfolgt eine Relativbewegung des Kontaktierungskörpers 22a am Antriebselement 31, wobei das Antriebselement 31 eine translatorische Bewegung ausführt und gleichzeitig der Hebel 22 um die Achse 21 sich verschwenkt. Damit eine Rückbewegung des Hebels 22 während der Bewegung der Deckeleinheit 40 von der Offenstellung 2 in die Schließstellung 1 sichergestellt ist, ist ein Federelement 12 vorgesehen, dass auf den Hebel 22 wirkt, welches in Figur 3 bis Figur 5 dargestellt ist. Der Hebel 22 ist mit einer Oberseite 23 und einer Unterseite 24 ausgeführt, wobei an der Oberseite 23 der Kontaktierungskörper 22a beabstandet zur Achse 21 angeordnet ist. Die Unterseite 24 des Hebels 22 ist mit einer einseitig offenen Schalung 24a ausgeführt, in der das Federelement 12 mit seinem ersten freien Ende 12a aufgenommen ist (s. Figur 3). Das Federelement 12 erstreckt sich ausgehend von der Unterseite 24 des Hebels 22 in Richtung der Deckeleinheit 40. Ferner umfasst das Federelement 12 an der der Schalung 24a abgewandten Seite zumindest bereichsweise die Hülse 14 und stützt sich mit seinem freien zweiten Ende 12b innenseitig des Gehäuses 11 ab, welches besonders in Figur 3 bis Figur 5 verdeutlicht ist.

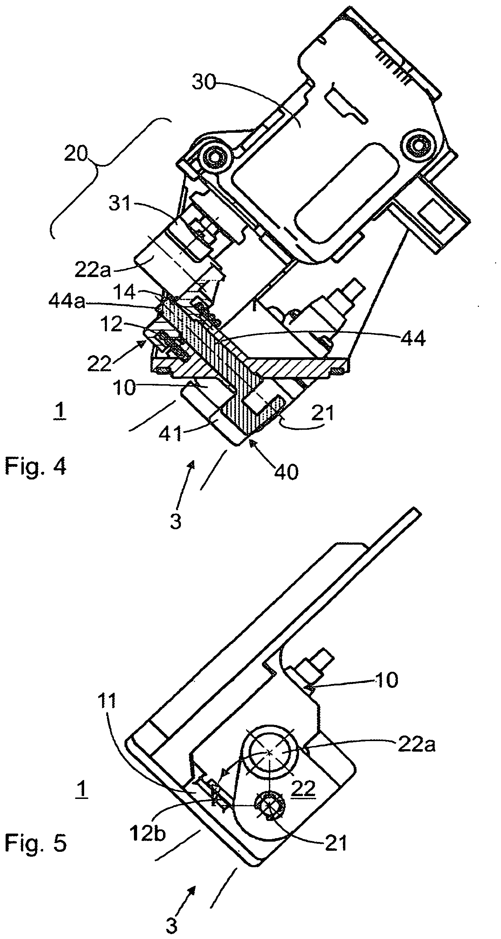

Gemäß Figur 5 wird der Schwenkbereich des Kontaktierungskörpers 22a um die Achse 21 verdeutlicht, wobei während der Bewegung des Antriebs 30 der Kontaktierungskörper 22a sich an der konkaven Seite 31a des Antriebselementes 31 hin- und herbewegt. In der Schließstellung 1 der Deckeleinheit 40 gemäß Figur 1 ist der Kontaktierungskörper 22a leicht nach rechts, zur Achse 21 hin am Antriebselement 31 anliegend angeordnet. Während der Antrieb 30 gemäß Figur 2 linear ausfährt, erfolgt eine Bewegung des Kontaktierungskörpers 22a gemäß Figur 5 entlang eines Kreissegmentes. Folglich verfährt der Kontaktierungskörper 22a zur linken Seite des Antriebselementes 31 entlang der konkaven Seite 31a, bevor in der Offenstellung 2 der Deckeleinheit 40 gemäß Figur 2 der Kontaktierungskörper 22a seine Ursprungsposition an der konkaven Seite 31a des Antriebselementes 31 erreicht hat. Während der Bewegung des Antriebs 30 führt der Kontaktierungskörper 22a einen Hub senkrecht zur Bewegungsrichtung des Antriebs 30 aus.

In der Offenstellung 2 der Deckeleinheit 40 ist die Drehfeder 12 gespannt und übt auf den Hebel 22 eine Kraft aus. Wenn der Antrieb 30 ausgehend von Figur 2 einen Schließvorgang für die Deckeleinheit 40 auslöst, unterstützt die Federkraft den Mechanismus 20, um die Deckeleinheit 40 in Richtung Schließstellung 1 zu bewegen. Hierbei drückt die Federkraft den Kontaktierungskörper 22a gegen die konkave Seite 31a des Antriebselementes 31, während sich der Antrieb 30 von seiner ausgefahrenen Position gemäß Figur 2 in seiner eingefahrene Position gemäß Figur 1 zurückbewegt.

Besonders vorteilhaft bei dieser dargestellten Ausführungsform ist, dass der Benutzer - ohne den Antrieb 30 zu aktivieren - die Frontplatte 41 manuell aus der in Figur 1 dargestellten Schließstellung 1 in die Offenstellung 2 gemäß Figur 2 bringen kann, um beispielsweise das Objektiv 13 zu säubern. Hierbei dreht sich der Hebel 22 um die Achse 21, wobei gleichzeitig der Kontaktierungskörper 22a sich von der konkaven Seite 31 des Antriebselementes 31 löst. Das Federelement 12 sorgt mit der auf den Hebel 22 wirkenden Federkraft, dass eine entsprechende Rückstellung der Frontplatte 41 in die Schließstellung automatisch erfolgt.

### Bezugszeichenliste

- 1: Schließstellung
- 2: Offenstellung
- 3: Aufnahmerichtung
- 10: Kameraeinheit
- 11: Gehäuse
- 12: Federelement
- 12a: erstes freies Ende des Federelementes
- 12b: zweites freies Ende des Federelementes
- 13: Objektiv der Kameraeinheit
- 14: Hülse
- 15: Aufnahmebereich
- 16: Dichtung
- 20: Mechanismus
- 21: Drehachse
- 22: Hebel
- 22a: Kontaktierungskörper
- 23: Oberseite des Hebels
- 24: Unterseite des Hebels
- 24a: Schalung
- 30: Antrieb
- 31: Antriebselement
- 31a: konkave Seite
- 40: Deckeleinheit
- 41: Frontplatte
- 41a: Innenseite der Frontplatte
- 42: Arm
- 43: Dichtung
- 44: Stabelement
- 44a: freies Ende des Stabelementes

## Patentansprüche

1. Vorrichtung mit einer Kameraeinheit (10), die zur Bilderfassung des Außenbereiches eines Kraftfahrzeuges dient, und einer Deckeleinheit (40) und einem Antrieb (30), wobei die Deckeleinheit (40) über den Antrieb (30) von einer Schließstellung (1) in eine Offenstellung (2) und umgekehrt bewegbar ist, wobei die Deckeleinheit (40) mit einer Frontplatte (41) ausgeführt ist, die in der Schließstellung (1) der Deckeleinheit (40) das Objektiv (13) der Kameraeinheit (10) verdeckt und die Kameraeinheit (10) zu einer Aufnahmerichtung (3) ausgerichtet ist, bei der in der Offenstellung (2) der Deckeleinheit (40) die Bilderfassung durchführbar ist,
**gekennzeichnet durch**
einen Mechanismus (20), wobei der Antrieb (30) mit dem Mechanismus (20) derart zusammenwirkt, dass zu Beginn des Öffnungsvorganges die Frontplatte (41) der Deckeleinheit (40), die um eine Drehachse (21) verschwenkbar gelagert ist, sich von der Kameraeinheit (10) abhebend und lösend entfernt.

2. Vorrichtung nach Anspruch 1,
**dadurch gekennzeichnet,**
**dass** zu Beginn des Öffnungsvorganges die Frontplatte (41) sich im Wesentlichen in Aufnahmerichtung (3) gleichzeitig bewegt.

3. Vorrichtung nach Anspruch 1 oder 2,
**dadurch gekennzeichnet,**
**dass** der Mechanismus (20) innerhalb eines Gehäuses (11) angeordnet ist, wobei die Frontplatte (41) in jeder Stellung der Deckeleinheit (40) außerhalb des Gehäuses (11) sich befindet.

4. Vorrichtung nach Anspruch 1 oder 2,
**dadurch gekennzeichnet,**
**dass** der Mechanismus (20) innerhalb eines Gehäuses (11) angeordnet ist, wobei die Deckeleinheit (40) in der Schließstellung (1) und/oder in der Offenstellung (2) zumindest teilweise innerhalb des Gehäuses (11) sich befindet.

5. Vorrichtung nach einem der vorhergehenden Ansprüche,
**dadurch gekennzeichnet,**
**dass** die Frontplatte (41) an der der Kameraeinheit (10) zugewandten Innenseite (41a) eine Dichtung (43) aufweist, die in der Schließstellung (1) der Deckeleinheit (40) auf der Kameraeinheit (10) aufliegt.

6. Vorrichtung nach einem der vorhergehenden Ansprüche,
**dadurch gekennzeichnet,**
**dass** der Mechanismus (20) mit der Achse (21) ausgeführt ist, um die die Deckeleinheit (40) drehbar beweglich ist, wobei die Deckeleinheit (40) mit einem Arm (42) ausgeführt ist, der ausgehend von der Frontplatte (41) bis zur Achse (21) verläuft, wobei insbesondere die Achse (21) seitlich zur Kameraeinheit (10) verläuft.

7. Vorrichtung nach einem der vorhergehenden Ansprüche,
**dadurch gekennzeichnet,**
**dass** der Mechanismus (20) einen Hebel (22) aufweist, der zwischen dem Antrieb (30) und der Deckeleinheit (40) an der Achse (21) drehbar gelagert ist, wobei insbesondere der Hebel (22) mit einem Kontaktierungskörper (22a) ausgebildet ist, an dem der Antrieb (30) angreift und wobei insbesondere der Antrieb (30) an seinem freien Ende ein Antriebselement (31) aufweist, das auf den Kontaktierungskörper (22a) wirkt.

8. Vorrichtung nach einem der vorhergehenden Ansprüche,
**dadurch gekennzeichnet,**
**dass** der Kontaktierungskörper (22a) zylinderartig ausgebildet ist und/oder das Antriebselement (31) eine konkave Seite (31a) aufweist, die während der Bewegung der Deckeleinheit (40) von der Schließstellung (1) in die Offenstellung (2) auf dem Kontaktierungskörper (22a) anliegt und/oder während der Bewegung der Deckeleinheit (40) eine Relativbewegung des Kontaktierungskörpers (22a) am Antriebselement (31) erfolgt, wobei das Antriebselement (31) eine translatorische Bewegung ausführt und gleichzeitig der Hebel (22) um die Achse (21) sich verschwenkt und/oder ein Federelement (12) vorgesehen ist, das auf den Hebel (22) wirkt, wodurch eine Rückbewegung des Hebels (22) während der Bewegung der Deckeleinheit (40) von der Offenstellung (2) in die Schließstellung (1) sichergestellt ist.

9. Vorrichtung nach einem der vorhergehenden Ansprüche,
**dadurch gekennzeichnet,**
**dass** das Gehäuse (11) mit einer Hülse (14) ausgeführt ist, in der ein Stabelement (44) der Deckeleinheit (40) hineinragt, wobei das freie Ende (44a) des Stabelementes (44) am Hebel (22) befestigt ist.

10. Vorrichtung nach einem der vorhergehenden Ansprüche,
**dadurch gekennzeichnet,**
**dass** der Kontaktierungskörper (22a) eine Mantelfläche aufweist, dessen Krümmung größer ist als die Krümmung der konkaven Seite (31a) des Antriebselementes (31).

11. Vorrichtung nach einem der vorhergehenden Ansprüche,
**dadurch gekennzeichnet,**
**dass** der Arm (42), die Frontplatte (41) und das Stabelement (44) der Deckeleinheit (40) ein gemeinsames Bauteil aus dem gleichen Material bilden.

12. Vorrichtung nach einem der vorhergehenden Ansprüche,
**dadurch gekennzeichnet,**
**dass** der Hebel (22) mit einer Oberseite (23) und einer Unterseite (24) ausgeführt ist, wobei an der Oberseite (23) der Kontaktierungskörper (22a) beabstandet zur Achse (21) angeordnet ist und die Unterseite (24) mit einer einseitig offenen Schalung (24a) ausgeführt ist, in der das Federelement (12) mit seinem ersten freien Ende (12a) aufgenommen ist, wobei insbesondere das Federelement (12) ausgehend von der Unterseite (24) des Hebels (22) sich in Richtung der Deckeleinheit (40) erstreckt und an der der Schalung (24a) abgewandten Seite zumindest bereichsweise die Hülse (14) umfasst und sich mit seinem zweiten freien Ende (12b) innenseitig des Gehäuses (11) abstützt.

13. Vorrichtung nach einem der vorhergehenden Ansprüche,
**dadurch gekennzeichnet,**
**dass** das Gehäuse (11) einen in den Innenbereich ragenden Aufnahmebereich (15) aufweist, in den die Kameraeinheit (10) rückseitig eingesetzt ist.

14. Vorrichtung nach einem der vorhergehenden Ansprüche,
**dadurch gekennzeichnet,**
**dass** der Hebel (22) und der Antrieb (30) über ein Gelenk in Wirkverbindung stehen.

## Claims

1. Device having a camera unit (10), which is used for image acquisition of the outside area of a motor vehicle, and a cover unit (40) and a drive (30), wherein the cover unit (40) can be moved via the drive (30) from a closed position (1) into an open position (2) and vice versa, said cover unit (40) being implemented with a front plate (41), which conceals the lens (13) of the camera unit (10) in the closed position (1) of the cover unit (40) and said camera unit (10) being oriented towards a receiving direction (3), wherein the image acquisition can be performed in the open position (2) of the cover unit (40),
**characterized by**
a mechanism (20), wherein the drive (30) cooperates with the mechanism (20) in such a way that at the beginning of the opening procedure, the front plate (41) of the cover unit (40), which is pivotably mounted about a rotational axis (21), moves lifting and detaching from the camera unit (10).

2. Device according to Claim 1,
**characterized in that**
at the beginning of the opening procedure the front plate (41) moves substantially in the receiving direction (3) at the same time.

3. Device as claimed in Claim 1 or 2,
**characterized in that**
the mechanism (20) is arranged within a housing (11), the front plate (41) being located outside of the housing (11) in each position of the cover unit (40).

4. Device as claimed in Claim 1 or 2,
**characterized in that**
the mechanism (20) is arranged within a housing (11), wherein the cover unit (40) is arranged at least partially within the housing (11) in the closed position (1) and/or in the open position (2).

5. Device according to any one of the preceding claims,
**characterized in that**
on the inner side (41a) facing the camera unit (10) the front plate (41) comprises a seal (43), which rests on the camera unit (10) in the closed position (1) of the cover unit (40).

6. Device according to any one of the preceding claims,
**characterized in that**
the mechanism (20) is implemented with the axle (21), about which the cover unit (40) is rotatably movable, the cover unit (40) being designed with an arm (42), which extends from the front plate (41) to the axle (21), in particular the axle (21) extending to a side of the camera unit (10).

7. Device according to any one of the preceding claims,
**characterized in that**
the mechanism (20) comprises a lever (22), which is rotatably mounted on the axle (21) between the drive (30) and the cover unit (40), in particular the lever (22) being designed with a contact body (22a), with which the drive (30) engages and the drive (30) in particular comprising at the free end thereof a drive element (31), which acts on the contacting body (22a).

8. Device according to any one of the preceding claims,
**characterized in that**
the contacting body (22a) has a cylinder-like design and/or the drive element (31) comprises a concave side (31a), which abuts against the contact body (22a) during the movement of the cover unit (40) from the closed position (1) into the open position (2) and/or a relative movement of the contact body (22a) on the drive element (31) takes place during the movement of the cover unit (40), wherein the drive element (31) executes a translational movement at the same time as the lever (22) pivots about the axle (21), and/or a spring element (12) is provided, which acts on the lever (22), thus ensuring a return movement of the lever (22) during the movement of the cover unit (40) from the open position (2) into the closed position (1).

9. Device according to any one of the preceding claims,
**characterized in that**
the housing (11) is designed with a sleeve (14), in which a bar element (44) of the cover unit (40) protrudes, wherein the free end (44a) of the bar element (44) is attached to the lever (22).

10. Device according to any one of the preceding claims,
**characterized in that**
the contacting body (22a) comprises a peripheral surface, the curvature of which is greater than the curvature of the concave side (31a) of the drive element (31).

11. Device according to any one of the preceding claims,
**characterized in that**
the arm (42), the front plate (41) and the bar element (44) of the cover unit (40) form a common component from the same material.

12. Device according to any one of the preceding claims,
**characterized in that**
the lever (22) is designed with an upper side (23) and a lower side (24), the contact body (22a) being arranged on the upper side (23) at a distance from the axle (21) and the lower side (24) being designed with a casing (24a) open on one side, in which the spring element (12) is accommodated with its first free end (12a), the spring element (12) in particular extending from the lower side (24) of the lever (22) in the direction of the cover unit (40), and on the side facing away from the casing (24a), at least in some regions, enclosing the sleeve (14) and being supported with its second free end (12b) on the inside of the housing (11).

13. Device according to any one of the preceding claims,
**characterized in that**
the housing (11) comprises a receiving region (15), which projects into the inner region and into which the camera unit (10) is inserted at the rear.

14. Device according to any one of the preceding claims,
**characterized in that**
the lever (22) and the drive (30) are in operative connection via a joint.

## Revendications

1. Dispositif comportant une unité de caméra (10) qui sert à enregistrer l'image de l'extérieur d'un véhicule automobile, une unité de couvercle (40) et un entraînement (30), dans lequel l'unité de couvercle (40) est mobile à l'aide de l'entraînement (30) d'une position de fermeture (1) vers une position d'ouverture (2) et inversement, l'unité de couvercle (40) étant réalisée avec une plaque frontale (41) qui, dans la position de fermeture (1) de l'unité de couvercle (40), cache l'objectif (13) de l'unité de caméra (10) et l'unité de caméra (10) étant orientée dans un sens de prise de vue (3) dans lequel, dans la position ouverte (2) de l'unité de couvercle (40), la capture d'image peut être réalisé,
**caractérisé par**
un mécanisme (20), l'entraînement (30) coopérant avec le mécanisme (20) de manière à ce que, au début de l'opération d'ouverture, la plaque frontale (41) de l'unité de couvercle (40), qui s'appuie de manière pivotable autour d'un axe de rotation (21), se retire de l'unité de caméra (10) en se soulevant et en se détachant.

2. Dispositif selon la revendication 1,
**caractérisé en ce que**,
au début de l'opération d'ouverture, la plaque frontale (41) se déplace sensiblement simultanément dans le sens de prise de vue (3).

3. Dispositif selon la revendication 1 ou 2,
**caractérisé en ce que**
le mécanisme (20) est disposé à l'intérieur d'un boîtier (11), la plaque frontale (41) se trouvant, dans toute position de l'unité de couvercle (40), à l'extérieur du boîtier (11).

4. Dispositif selon la revendication 1 ou 2,
**caractérisé en ce que**
le mécanisme (20) est disposé à l'intérieur d'un boîtier (11) l'unité de couvercle (40) se trouvant, dans la position de fermeture (1) et/ou dans la position d'ouverture (2), au moins partiellement à l'intérieur du boîtier (11).

5. Dispositif selon une des revendications précédentes,
**caractérisé en ce que**
la plaque frontale (41) présente, sur sa face interne (41a) tournée vers l'unité de caméra (10), un joint (43) qui, en position de fermeture (1) de l'unité de couvercle (40), repose sur l'unité de caméra (10).

6. Dispositif selon une des revendications précédentes,
**caractérisé en ce que**
le mécanisme (20) est réalisée avec l'axe (21) autour duquel l'unité de couvercle (40) est mobile en rotation, l'unité de couvercle (40) étant réalisé avec un bras (42) qui s'étend en partant de la plaque frontale (41) jusqu'à l'axe (21), en particulier l'axe (21) s'étendant latéralement par rapport à l'unité de caméra (10).

7. Dispositif selon une des revendications précédentes,
**caractérisé en ce que**
le mécanisme (20) présente un levier (22) qui s'appuie de manière à pouvoir tourner entre l'entraînement (30) et l'unité de couvercle (40) au niveau de l'axe (21), le levier (22) est en particulier réalisé avec un corps de contact (22a) au niveau duquel l'entraînement (30) s'engrène et en particulier l'entraînement (30) présentant à son extrémité libre un élément d'entraînement (31) qui agit sur le corps de contact (22a).

8. Dispositif selon une des revendications précédentes,
**caractérisé en ce que**
le corps de contact (22a) est réalisée en une forme cylindrique et/ou l'élément d'entraînement (31) présente une face concave (31a) qui, pendant le mouvement de l'unité de couvercle (40) de la position de fermeture (1) vers la position d'ouverture (2), repose sur le corps de contact (22a) et/ou, pendant le mouvement de l'unité de couvercle (40), il se produit un mouvement relatif du corps de contact (22a) au niveau de l'élément de commande (31), l'élément de commande (31) exécutant un mouvement translatoire et le levier (22) pivotant simultanément autour de l'axe (21) et/ou étant prévu un élément à ressort (12) qui agit sur le levier (22), ce qui garantit un mouvement de retour du levier (22) pendant le mouvement de l'unité de couvercle (40) de la position ouverte (2) vers la position de fermeture (1).

9. Dispositif selon une des revendications précédentes,
**caractérisé en ce que**
le boîtier (11) est réalisée avec un tube (14) qui rentre dans un élément en forme de barre (44) de l'unité de couvercle (40), l'extrémité libre (44a) de l'élément en forme de barre (44) étant fixée au levier (22).

10. Dispositif selon une des revendications précédentes,
**caractérisé en ce que**
le corps de contact (22a) présente une surface latérale dont la courbure est supérieure à la courbure de la face concave (31a) de l'élément de commande (31).

11. Dispositif selon une des revendications précédentes,
**caractérisé en ce que**
le bras (42), la plaque frontale (41) et l'élément en forme de barre (44) de l'unité de couvercle (40) forment une pièce commune faite du même matériau.

12. Dispositif selon une des revendications précédentes,
**caractérisé en ce que**
le couvercle (22) est réalisée avec une face supérieure (23) et une face inférieure (24), le corps de contact (22a) étant disposé à distance de l'axe (21) sur la face supérieure (23) et la face inférieure (24) étant réalisé avec une coque ouverte d'un côté (24a) dans laquelle l'élément à ressort (12) et reçu par sa première extrémité libre (12a), en particulier l'élément à ressort (12) s'étendant depuis la face inférieure (24) du levier (22) en direction de l'unité de couvercle (40) et entourant du moins par endroits le tube (14) au niveau de la face tournée vers la coque (24a) et s'appuyant par sa seconde extrémité libre (12b) sur la face interne du boîtier (11).

13. Dispositif selon une des revendications précédentes,
**caractérisé en ce que**
le boîtier (11) présente une zone réceptrice proéminente à l'intérieur (15) dans laquelle unité de caméra (10) est inséré par l'arrière.

14. Dispositif selon une des revendications précédentes,
**caractérisé en ce que**
le levier (22) et l'entraînement (30) sont en liaison par une articulation.
